# EUROPEAN PATENT APPLICATION

(11) **EP 4 152 513 A1**
(43) Date of publication of application: **22.03.2023**
(21) Application number: 21939696.7
(22) Date of filing: 07.05.2021
(51) Int. Cl.: H01M 50/533, H01M 4/13, H01M 10/0525

(54) **ELECTRODE ASSEMBLY, BATTERY, DEVICE, AND MANUFACTURING METHOD FOR ELECTRODE ASSEMBLY**

(71) Applicant: Contemporary Amperex Technology Co., Limited, Fujian PRC 352100 (CN)
(72) Inventor: BAI, Qinglin, Ningde, Fujian 352100 (CN); WEN, Yuqian, Ningde, Fujian 352100 (CN); JIANG, Lingyan, Ningde, Fujian 352100 (CN)
(74) Representative: Thoma, Michael
(86) International application number: PCT/CN2021/092210
(87) International publication number: WO 2022/233050

(57) **Abstract**

The present application relates to an electrode assembly, a battery, a device, and a method for manufacturing the electrode assembly, the electrode assembly being configured for a secondary battery, where the electrode assembly includes a main portion and a tab, the tab is located at an end portion of the main portion and is connected to the main portion; and the tab includes a shaping guide portion and a shaping deformation area, and the shaping guide portion guides the tab to generate predetermined deformation during shaping so as to form the shaping deformation area. In the present application, by arranging the shaping guide portion on the tab, when a tab end face is shaped, the shaping guide portion guides the tab to generate roughly regular deformation, thereby forming the compact and flat tab end face. At the same time, the arrangement of the shaping guide portion reduces the force required for the shrinking deformation of the tab and avoids damage or misalignment of an electrode plate.

## Description

### Technical Field

The present application relates to the technical field of energy storage devices, in particular to an electrode assembly, a battery, a device, and a method for manufacturing an electrode assembly.

### Background Art

The existing cylindrical battery with a large capacity mostly uses all-tab positive and negative electrodes. A tab end face needs to be welded together with a current collecting plate such that battery current can be output from the current collecting plate. Before welding, the tab end face needs to be shaped, and a tab is compressed axially to obtain a compact and flat end face, thereby ensuring the welding area and strength of the tab and the current collecting plate, and preventing an electrode plate from being burned during welding.

A common method for shaping a tab end face includes: direct extrusion shaping, ultrasonic vibration kneading, and mechanical rotary kneading. In direct extrusion shaping, a large extrusion force is required, which tends to cause axial misalignment of the electrode plate or a separator, and the edge of the electrode plate is easily stressed to cause decarbonization and powder removal; in addition, a lodging direction of the tab is random, and the tabs on the end faces after extrusion are unevenly distributed, and are easily welded through during laser welding. In ultrasonic vibration kneading, high-frequency ultrasonic vibration will lead to the fracture of a tab foil, producing a lot of metal debris, and resulting in excessive self-discharge of a cell core or even short circuit. In mechanical rotary kneading, a kneading head rotates at a high speed and crushes the tab, producing metal debris, and resulting in excessive self-discharge of a cell core or even short circuit, and a kneading end face is too compact, which is not good for the filling and infiltration of an electrolyte.

### Summary of the Invention

In order to solve the above problems, the present application provides an electrode assembly, a battery, a device, and a method for manufacturing the electrode assembly, where a tab end face is easily shaped to form a compact and flat end face.

According to a first aspect of an embodiment of the present application, provided is an electrode assembly for a secondary battery, the electrode assembly including: a main portion; and a tab located at an end portion of the main portion and connected to the main portion, where the tab includes a shaping guide portion and a shaping deformation area, and the shaping guide portion guides the tab to generate predetermined deformation during shaping so as to form the shaping deformation area.

In the electrode assembly provided by the present application, the shaping guide portion and the shaping deformation area are formed on the tab, and when a tab end face is shaped, the shaping guide portion guides the tab to generate roughly regular deformation, that is, forming the shaping deformation area, thereby enabling the tab end face to be compact and flat. At the same time, since the shaping guide portion is provided, the force required for the shrinking deformation of the tab is reduced, and the tab is easily deformed during shaping, so that the electrode plate is not damaged or misaligned.

In a possible design, in an unwound state of the tab, the shaping guide portion includes a plurality of indentations arranged at intervals.

The shaping guide portion includes the plurality of indentations arranged at intervals, and the arrangement of the indentations enables the shaping guide portion to have a good effect on shaping guidance, and to also have an effect on deformation guidance of an inner ring of a small curvature radius of the wound tab.

In a possible design, the indentations include a long-strip indentation forming an included angle of 30° to 90° with an axial direction of the electrode assembly.

The included angle of 30° to 90° formed between the indentation and the axial direction of the electrode assembly enables the tab to generate directional lodging under the action of a small axial extrusion force during shaping, thereby forming predetermined deformation.

In a possible design, the indentations include a first elongated indentation and a second elongated indentation, where the end of the first elongated indentation close to the main portion coincides with the end of the second elongated indentation close to the main portion, so that an included angle between the first elongated indentation and the second elongated indentation is 30° to 90°.

At the same time, long-strip indentations with two angles are arranged such that the interior of the tab is more easily compressed in the shaping process, and the compressed tab between the two kinds of indentations can be contained to form a compact end face.

In a possible design, the indentations include a long-strip indentation forming an included angle of 90° with an axial direction of the electrode assembly.

The included angle between the indentation and the axial direction of the electrode assembly is 90°, which makes the tab more easily compressed when subjected to the axial extrusion force during shaping and makes the tab end face more compact after shaping.

In a possible design, the indentations include discontinuous long-strip indentations, each of which forms an included angle of 90° with an axial direction of the electrode assembly.

In a possible design, in an unwound state of the tab, the shaping guide portion includes a plurality of openings arranged at intervals.

In a possible design, the openings include a linear incision forming an included angle of 30° to 90° with an axial direction of the electrode assembly.

The linear incision has a good effect on deformation guidance, which enables the tab to generate directional lodging under the action of a small axial extrusion force during shaping, thereby forming predetermined deformation.

In a possible design, the openings include a plurality of hole-shaped incisions arranged in a straight line, the straight line forming an included angle of 30° to 90° with an axial direction of the electrode assembly.

The linear incisions are arranged in a straight line and have a good effect on deformation guidance, which enables the tab to generate directional lodging under the action of a small axial extrusion force during shaping, thereby forming predetermined deformation.

In a possible design, a spacing between the indentations is not more than 10 mm.

A spacing between adjacent indentations is not more than 10 mm, which may better ensure that the indentations on the inner ring of the tab can have a guiding effect during shaping.

In a possible design, a spacing between the openings is not more than 10 mm.

A spacing between adjacent openings is not more than 10 mm, which may better ensure that the openings on the inner ring of the tab can have a guiding effect during shaping.

In a possible design, a strengthening area is provided at the end of the tab connected to the main portion.

The strengthening area is formed at the end of the tab connected to the end portion of the main portion, which increases the strength of the place where the tab is connected to the end portion of the main portion, thereby providing support for the tab in the shaping of the tab end face, preventing the edge of the coated area of the electrode plate from being damaged, and protecting the electrode plate.

In a possible design, in an unwound state of the tab, the length of the tab in an axial direction of the electrode assembly is 4-15 mm.

The length of the tab is set to be 4-15 mm, which may ensure that the tab has enough thickness after shaping so as to form the shaping deformation area and to avoid welding through the tab when the tab end face and the current collecting plate are welded, and may also ensure that an empty foil area of the tab is relatively narrow, reducing the material cost.

In a possible design, in an unwound state of the tab, the length of the shaping guide portion in an axial direction of the electrode assembly is 1/5 - 4/5 of the length of the tab.

The length of the shaping guide portion is set to be 1/5 - 4/5 of the length of the tab, which may ensure that the tab is easily deformed and shrunk during shaping so as to form the shaping deformation area.

In a possible design, in the axial direction of the electrode assembly, the length of the end of the shaping guide portion close to the main portion from the end of the main portion connected to the tab is not less than 0.5 mm.

Keeping a certain distance between the shaping guide portion and the end portion of the main portion may avoid causing damage to the electrode plate because of the axial extrusion force transmitted to the edge of the coated area.

According to a second aspect of an embodiment of the present application, provided is a battery, including the electrode assembly as described above.

According to a third aspect of an embodiment of the present application, provided is a device, including the battery as described above, the battery being configured to provide electric energy.

According to a fourth aspect of an embodiment of the present application, provided is a method for manufacturing an electrode assembly, the method including the following steps of: providing an electrode plate and a separator, the electrode plate including a coated area and a tab area; winding the electrode plate and the separator into an electrode assembly, where the coated area and the separator form a main portion, and the tab area forms a tab, the tab including a shaping guide portion; and shaping the end of the tab, where the shaping guide portion guides the tab to generate predetermined deformation so as to form a shaping deformation area.

In the electrode assembly, the battery, the device and the method for manufacturing the electrode assembly provided by the present application, the shaping guide portion is formed on the tab, and when a tab end face is shaped, the shaping guide portion guides the tab to generate roughly regular deformation, forming the shaping deformation area, thereby enabling the tab end face to be compact and flat. At the same time, since the shaping guide portion is provided, the force required for the shrinking deformation of the tab is reduced, and the tab is easily deformed during shaping, so that the electrode plate is not damaged or misaligned.

It should be understood that the above general description and the following detailed description are merely exemplary and are not intended to limit the present application.

### Brief Description of the Drawings

In order to more clearly illustrate the technical solutions of embodiments of the present application, the drawings to be used in the description of the embodiments of the present application will be described briefly below. Obviously, the drawings in the following description are merely specific embodiments of the present application. For those skilled in the art, other embodiments can also be obtained according to the following drawings without any creative effort.
FIG. 1 is a schematic structural diagram of a device according to a specific embodiment of the present application;
FIG. 2 is a schematic structural diagram of a battery cell according to a specific embodiment of the present application;
FIG. 3 is a schematic exploded structural diagram of the battery cell shown in FIG. 2;
FIG. 4 is a schematic structural diagram of an electrode assembly according to a specific embodiment of the present application;
FIG. 5 is a schematic structural diagram of the electrode assembly shown in FIG. 4 when partially unwound;
FIG. 6 is a partial schematic diagram of a first electrode plate according to a specific embodiment of the present application;
FIG. 7 is a partial enlarged view of part I shown in FIG. 6 according to a specific embodiment;
FIG. 8 is a cross-sectional view of the battery cell shown in FIG. 2 in an axial position;
FIG. 9 is a partial enlarged view of part II shown in FIG. 8;
FIG. 10 is a partial schematic diagram of a first electrode plate, illustrating a stressed condition of a tab during shaping and a specific shape of a shaping guide portion;
FIG. 11 is a sectional view taken through A1-A1 in FIG. 7, showing an embodiment of an indentation;
FIG. 12 is a sectional view taken through A1-A1 in FIG. 7, showing another embodiment of the indentation;
FIG. 13 is a partial schematic diagram of a first electrode plate, showing another specific embodiment of a shaping guide portion;
FIG. 14 is a partial schematic diagram of a first electrode plate, showing another specific embodiment of a shaping guide portion;
FIG. 15 is a sectional view taken through A2-A2 in FIG. 14;
FIG. 16 is a partial schematic diagram of a first electrode plate, showing another specific embodiment of a shaping guide portion;
FIG. 17 is a sectional view taken through A3-A3 in FIG. 16;
FIG. 18 is a partial schematic diagram of a first electrode plate, showing another specific embodiment of a shaping guide portion;
FIG. 19 is a sectional view taken through A4-A4 in FIG. 18;
FIG. 20 is a partial schematic diagram of a first electrode plate, showing another specific embodiment of a shaping guide portion;
FIG. 21 is a sectional view taken through A5-A5 in FIG. 20;
FIG. 22 is a partial schematic diagram of a first electrode plate, showing another specific embodiment of a shaping guide portion;
FIG. 23 is a flowchart of a method for manufacturing an electrode assembly according to a specific embodiment of the present application.

### List of reference signs:

A - Vehicle;
B - Battery cell;
C - Controller;
D - Battery;
M - Motor;
100 - Electrode assembly;
   101 - Main portion;
   102 - Tab;
      102a - First tab;
      102b - Second tab;
   103 - End portion of the main portion;
      103a - First end portion;
      103b - Second end portion;
   104 - Tab end face;
200 - Housing;
   Opening - 21;
300 - End cap assembly;
   31 - Electrode terminal;
   32 - End cap;
   33 - Insulator;
   34 - Current collecting plate;
1 - First electrode plate;
   11 - First coated area;
   12 - First tab area;
      121 - Shaping guide portion;
         121a - Long-strip indentation;
         121b - First elongated indentation;
         121c - Second elongated indentation;
         121d - Third elongated indentation;
         121e - Fourth elongated indentation;
         121f - Fifth elongated indentation;
         121g - Linear incision;
         121h - Hole-shaped incision;
      122 - Shaping deformation area;
   13 - First strengthening area;
2 - Second electrode plate;
   21 - Second coated area;
   22 - Second tab area;
   23 - Second strengthening area;
3 - Separator;
F - Axial extrusion force;
   F1 - Component perpendicular to the shaping guide portion;
   F2 - Component parallel to the shaping guide portion;
X - Axial direction of the electrode assembly;
Y - Length direction of the electrode plate;
R - Circumferential direction of the electrode assembly;
L - Straight line;
L1 - Length of the tab in the axial direction of the electrode assembly;
L2 - Length of the shaping guide portion in the axial direction of the electrode assembly;
L3 - Length of an end portion of the shaping guide portion close to the main portion from the end portion of the main portion in the axial direction of the electrode assembly;
L4 - Spacing between adjacent indentations;
L5 - Spacing between adjacent openings;
α1 - Included angle between the indentation and the axial direction of the electrode assembly;
α2 - Included angle between the first elongated indentation and the second elongated indentation;
α3 - Included angle between the long-strip indentation and the axial direction of the electrode assembly;
α4 - Included angle between the opening and the axial direction of the electrode assembly;
α5 - Included angle between the straight line and the axial direction of the electrode assembly.

The accompanying drawings herein are incorporated into the description and constitute part of the description, illustrate the embodiments conforming to the present application, and are intended to explain the principles of the present application together with the description.

### Detailed Description of Embodiments

To better understand the technical solutions of the present application, embodiments of the present application will be described in detail below with reference to the accompanying drawings.

Apparently, the described embodiments are merely some of, but not all of, the embodiments of the present application. All the other embodiments obtained by those of ordinary skill in the art based on the embodiments of the present application without any creative effort shall fall within the scope of protection of the present application.

The terms used in the embodiments of the present application are merely for the purpose of describing specific embodiments, but are not intended to limit the present application. The terms "alan", "the" and "this" of singular forms used in the embodiments and the appended claims of the present application are also intended to include plural forms, unless otherwise specified in the context clearly.

It should be understood that the term "and/or" used herein is merely intended to describe the associated relationship of associated objects, representing that three relationships may exist, for example, A and/or B, may include: the three instances of A alone, A and B simultaneously, and B alone. In addition, the character "/" herein generally indicates an "or" relationship between the associated objects.

It should be noted that the directional terms such as "above", "under", "left", and "right" described in the embodiments of the present application are described as seen from the angles shown in the accompanying drawings, and should not be understood as limitations to the embodiments of the present application. In addition, in the context, it should be further understood that when an element is referred to as being "above" or "under" another element, the element can not only be directly connected "above" or "under" the another element, but also be indirectly connected "above" or "under" the another element by means of an intermediate element.

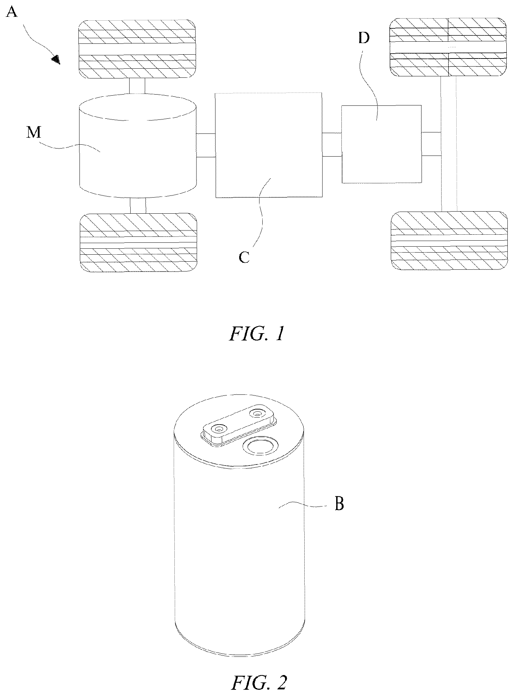

FIG. 1 is a schematic structural diagram of a device according to a specific embodiment of the present application.

As shown in FIG. 1, embodiments of the present application provide a battery D, and a device using the battery D as a power supply.

The device using the battery D as a power supply includes a vehicle A, a ship, a small aircraft, etc. The battery D is used in the device to provide electric energy to generate a driving force for driving the device. The device can also use electric energy and other types of energy (such as fossil energy) at the same time to jointly generate a driving force. Therefore, any device that can use the battery D as a power supply falls within the scope of protection of the present application.

As shown in FIG. 1, taking the vehicle A as an example, the vehicle A in the embodiment of the present application may be a new-energy vehicle, which may be a battery electric vehicle, or may be a hybrid electric vehicle or an extended-range electric vehicle. For example, the vehicle A includes a motor M, a controller C and a battery D. The battery D is horizontally provided at the bottom of a vehicle body. The controller C controls the battery D to supply power to the motor M. The motor M is connected to wheels on the vehicle body by means of a transmission mechanism so as to drive the vehicle A to run.

The battery D may include a plurality of battery cells B in order to meet different power demands, where the plurality of battery cells B may be in series connection, parallel connection or series-parallel connection. The series-parallel connection refers to a combination of series connection and parallel connection. The battery D may also be referred to as a battery pack. Optionally, the plurality of battery cells B may be in series connection or in parallel connection or in series-parallel connection to constitute a battery module, and a plurality of battery modules may then be in series connection or in parallel connection or in series-parallel connection to constitute the battery D. That is to say, the plurality of battery cells B may directly constitute the battery D, or may first constitute battery modules that may then constitute the battery D.

The battery cell B generally includes a cylindrical battery cell, a prismatic battery cell and a pouch battery cell. In the following embodiments, the cylindrical battery cell is taken as an example for a detailed description of the present application.

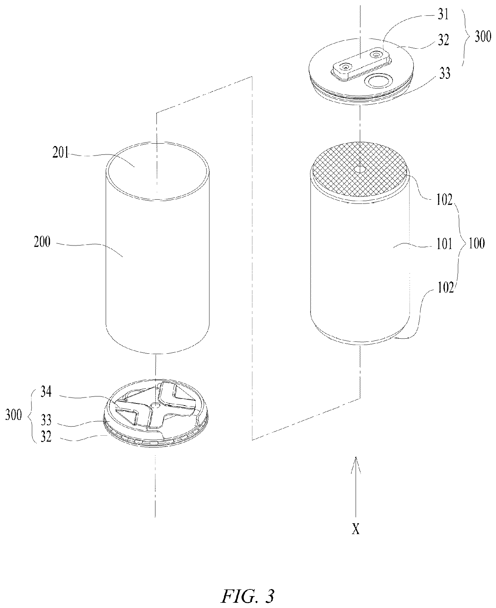

FIG. 2 is a schematic structural diagram of a battery cell B according to a specific embodiment of the present application; FIG. 3 is a schematic exploded structural diagram of the battery cell B shown in FIG. 2.

As shown in FIG. 2, the battery cell B in this embodiment is a cylindrical battery cell. The cylindrical battery cell refers to a battery cell B having a structure of a cylindrical appearance.

As shown in FIG. 3, the battery cell B in this embodiment is a secondary battery, which includes a housing 200 and an electrode assembly 100 provided in the housing 200. The housing 200 in this embodiment has a tubular structure. The housing 200 has openings 201 at two side ends in an axial direction X, and is internally provided with an accommodation space for accommodating the electrode assembly 100 and an electrolyte. The housing 200 may be made of materials such as aluminum, aluminum alloy, or plastic. The electrode assembly 100 includes a main portion 101 and tabs 102 located at two side ends of the main portion 101 in the axial direction X. The electrode assembly 100 may be loaded into the accommodation space within the housing 200 from the opening 201 at the end of the housing 200.

As shown in FIG. 3, the battery cell B further includes an end cap assembly 300. The end cap assembly 300 is configured to close the openings 201 at two sides of the housing 200. The end cap assembly 300 includes an end cap 32, an insulator 33, an electrode terminal 31 and a current collecting plate 34. The end cap 32 covers the opening 201 of the housing 200 and is connected to the housing 200. For example, the end cap 32 may be welded to the housing 200. The insulator 33 and the electrode terminal 31 are both provided on the end cap 32. The insulator 33 is provided on the side of the end cap 32 close to the interior of the housing 200. The electrode terminal 31 is electrically connected to the electrode assembly 100 via the current collecting plate 34, and the current collecting plate 34 is fixedly mounted on the side of the end cap assembly 300 facing the tab 102. Illustratively, the housing 200 has two opposite openings 201, two end cap assemblies 300 are provided, and two end caps 32 respectively cover two openings 201 and are connected to the housing 200. The electrode assembly 100 is provided with one end cap assembly 300 corresponding to either of two ends in the axial direction X. When the battery cell B is assembled, the electrode assembly 100 is first provided in the housing 200, then the tabs 102 on two sides are respectively welded to the current collecting plates 34 of the end caps 300 on two sides, and then the end caps 32 on two sides are respectively fixedly connected to the housing 200 to complete the assembly of the battery cell B.

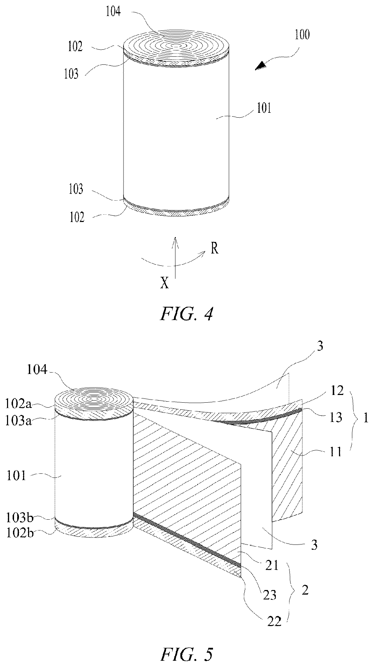

FIG. 4 is a schematic structural diagram of an electrode assembly 100 according to a specific embodiment of the present application.

As shown in FIG. 4, the tabs 102 on two sides of the electrode assembly 100 according to a specific embodiment of the present application form an all-tab structure. The electrode assembly 100 having the all-tab structure is formed as follows: when positive and negative electrode plates of the electrode assembly 100 are coated with an active material, part of an upper or a lower edge of the electrode plate is reserved without the coating of the active material, the area coated with the active material becomes a coated area, and the area not coated with the active material becomes a tab area; and when the electrode plate and a separator are wound, the coated area becomes the main portion 101 after winding, and the tab area becomes an all-tab 102 after winding. The all-tab structure not only enhances the overcurrent capability of the cylindrical electrode assembly 100, but also simplifies the manufacturing process of the electrode plate.

The electrode assembly 100 in FIG. 4 includes the main portion 101 and the tabs 102 provided at two sides of the main portion 101 in the axial direction X. An end portion 103 of the main portion that connects the main portion 101 and the tab 102 is formed at the boundary of the electrode plate coated with the active material, and two tabs 102 extend from the end portions 103 on two sides of the main portion in the axial direction X. A tab end face 104 is provided at the end of the tab 102 in the axial direction X, and tab end faces 104 on two sides are respectively welded to the current collecting plates 34 of the end cap assemblies 300 on two sides.

FIG. 5 is a schematic structural diagram of the electrode assembly 100 shown in FIG. 4 in a partially unwound state.

As shown in FIG. 5, the electrode assembly 100 in this embodiment is formed by winding a first electrode plate 1, a second electrode plate 2 and a separator 3, where the separator 3 is an insulator between the first electrode plate 1 and the second electrode plate 2, and is configured to insulate the first electrode plate 1 from the second electrode plate 2 to avoid contact between the first electrode plate 1 and the second electrode plate 2. The first electrode plate 1 includes a first coated area 11 and a first tab area 12; and the second electrode plate 2 includes a second coated area 21 and a second tab area 22. An active substance for the first electrode plate 1 is coated on the first coated area 11 of the first electrode plate 1, and an active substance for the second electrode plate 2 is coated on the second coated area 21 of the second electrode plate 2. The first tab area 12 and the second tab area 22 are not coated with the active substance.

When the first electrode plate 1, the second electrode plate 2 and the separator 3 are wound, the first coated area 11 of the first electrode plate 1, the second coated area 21 of the second electrode plate 2 and a corresponding portion of the separator 3 are wound into the main portion 101, the first tab area 12 of the first electrode plate 1 is wound into a first tab 102a, and the second tab area 22 of the second electrode plate 42b is wound into a second tab 102b. A first end portion 103a of the main portion 101 becomes a boundary for connecting the first coated area 11 and the first tab area 12, and a second end portion 103b of the main portion 101 becomes a boundary for connecting the second coated area 21 and the second tab area 22.

The tab 102 has a multi-layer structure. The first tab 102a and the second tab 102b have opposite polarities. Illustratively, the first tab 102a is a positive tab 102a, and the second tab 102b is a negative tab 102b.

In a specific embodiment, a first strengthening area 13 is provided at the end of the first tab area 12 close to the first end portion 103a, and a second strengthening area 23 is provided at the end of the second tab area 22 close to the second end portion 103b. The first strengthening area 13 and the second strengthening area 23 may be formed by applying a tab tape to the area of each of the first tab area 12 and the second tab area 22 that is close to the end portion 103 of the main portion. The rigidity of the first strengthening area 13 and the second strengthening area 23 coated with the tab tape is higher than the rigidity of foil in the area of tab not coated with the tab tape. The first strengthening area 13 and the second strengthening area 23 increase the strength of the place where the tab 102 is connected to the end portion 103 of the main portion, and may provide support when the tab end face 104 is shaped, preventing the first coated area 11 and the second coated area 21 from being damaged, and protecting the first electrode plate 1 and the second electrode plate 2. Of course, according to actual needs, the first strengthening area 13 and the second strengthening area 23 can also be not arranged.

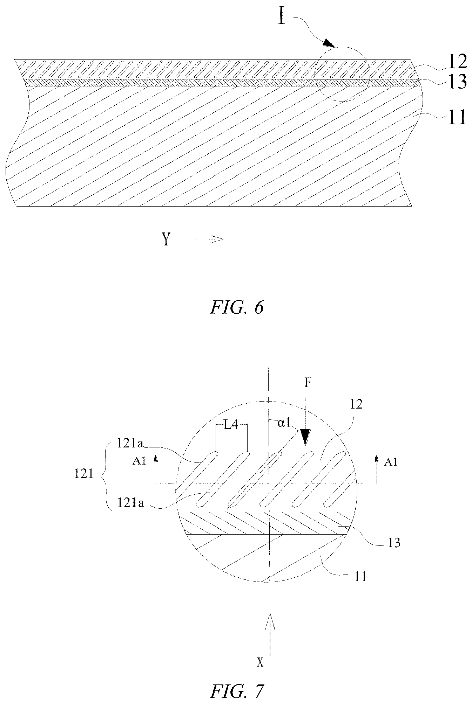

FIG. 6 is a partial schematic diagram of a first electrode plate 1 according to a specific embodiment of the present application.

As shown in FIG. 6, the first electrode plate 1 includes a first coated area 11, a first tab area 12 and a first strengthening area 13. The first electrode plate 1 is taken as an example below for a detailed description, and the second electrode plate 2 may be structurally the same as the first electrode plate 1.

FIG. 7 is a partial enlarged view of part I shown in FIG. 6 according to a specific embodiment.

As shown in FIG. 7, in a specific embodiment, a shaping guide portion 121 is prefabricated on the first tab area 12. The shaping guide portion 121 may be in the structure of an indentation or an opening or a combination of the indentation and the opening, formed on the first tab area 12. The structure of the indentation and the opening reduces the structural strength of the first tab area 12. Notably, FIG. 7 illustrates the shaping guide portion 121 in the structure of an indentation, including a plurality of long-strip indentations 121a.

The shaping guide portion 121 may be processed during the production of the first electrode plate 1, or in the process of winding the first electrode plate 1, the second electrode plate 2 and the separator 3, the shaping guide portion 121 is processed on the first tab area 12.

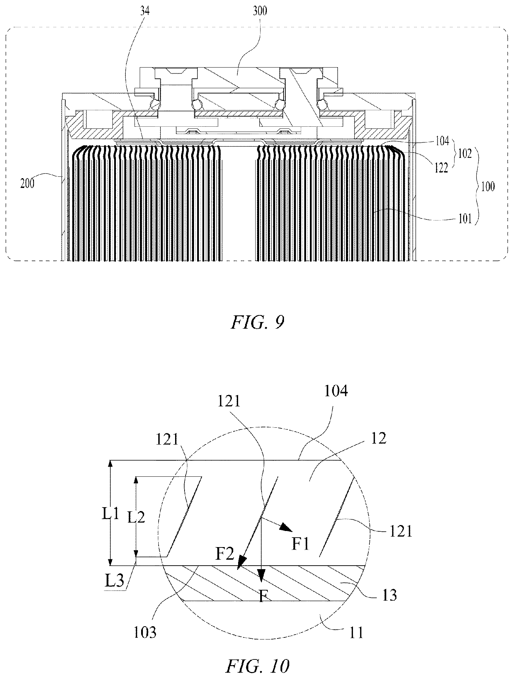

Before the first tab 102a is welded to the current collecting plate 34, the tab end face 104 needs to be shaped, and the first tab 102a is compressed axially to obtain a compact and flat end face 104, thereby ensuring the welding area and strength of the tab 102 and the current collecting plate 34, and preventing an electrode plate 1 from being burned during welding. In the shaping of the first tab 102a, the tab end face 104 is subjected to an axial extrusion force F, which causes deformation of the first tab area 12 and forms a shaping deformation area 122 (see FIG. 9). After being shaped, the tab end face 104 is welded to the current collecting plate 34 to complete the assembly of the battery cell B.

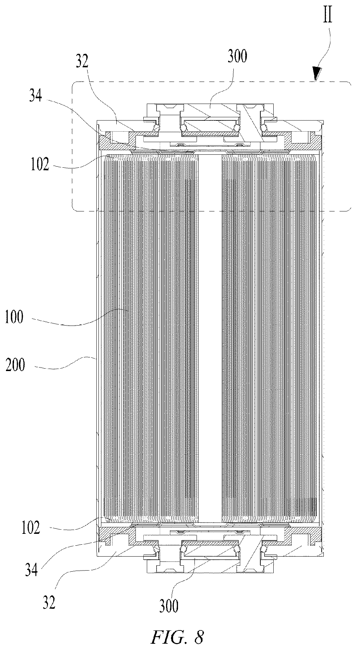

FIG. 8 is a cross-sectional view of the battery cell **B** shown in FIG. 2 in an axial position.

As shown in FIG. 8, the battery cell B according to a specific embodiment of the present application includes an electrode assembly 100, a housing 200, and end cap assemblies 300. The electrode assembly 100 is loaded into the housing 200, tabs 102 at two ends are respectively welded to current collecting plates 34 of the end cap assemblies 300 at two ends, and end caps 32 are connected to the housing 200.

After the first electrode plate 1, the second electrode plate 2 and the separator 3 are wound into the electrode assembly 100, the shaping guide portion 121 (see FIG. 7) prefabricated on the first tab area 12 is arranged on the tab 102 in a circumferential direction R.

FIG. 9 is a partial enlarged view of part II shown in FIG. 8.

In FIG. 9, reference numeral 122 represents a shaping deformation area. In the shaping of the tab end face 104, since the tab 102 is prefabricated with the shaping guide portion 121 (see FIG. 7; not shown in FIG. 9), when the tab 102 is subjected to an axial extrusion force F, the shaping guide portion 121 guides the tab 102 to generate predetermined deformation, forming a shaping deformation area 122.

In a specific embodiment, by kneading and shaping the tab end face 104, the tab end face 104 is flat and compact. In the process of kneading, the tab 102 is subjected to an axial extrusion force F to generate deformation. Due to the presence of the shaping guide portion 121, when the tab 102 is subjected to the axial extrusion force F, the tab 102 lodges in roughly the same direction along the circumferential direction R, resulting in roughly regular deformation. A lodging direction is affected by an included angle between the shaping guide portion 121 and the axial direction X.

FIG. 10 is a partial schematic diagram of a first electrode plate 1, illustrating a stressed condition of a tab 102 during shaping and a specific shape of a shaping guide portion 121.

In FIG. 10, the first tab area 12 is prefabricated with the shaping guide portion 121. For example, the shaping guide portion 121 includes a plurality of (three shown in FIG. 10) indentations or incisions. Notably, FIG. 10 illustrates the shaping guide portion 121 in the structure of an incision.

As shown in FIG. 10, in the shaping of the tab end face 104, the tab 102 is subjected to an axial extrusion force F, so that the tab 102 is compressed in the axial direction X. The axial extrusion force F may be decomposed into a component F1 perpendicular to the incision of the shaping guide portion 121 and a component F2 parallel to the incision of the shaping guide portion 121, the component F1 enabling the tab 102 to lodge in the direction of F1.

After the tab end face 104 is subjected to kneading and shaping, the area in the tab 102, apart from the shaping guide portion 121, that generates deformation is called as a shaping deformation area 122. As mentioned above, the shaping deformation area 122 lodges roughly in the direction of the component F1, forming roughly regular deformation. In the prior art, the tab is not provided with the shaping guide portion 121, and in the kneading and shaping of the tab end face, the direction of deformation of the tab 102 is random, not forming regular deformation. In an embodiment of the present application, since the tab 102 is preconfigured with the shaping guide portion 121, during shaping, the tab 102 is guided to lodge roughly in the same direction (the direction of component F1), generating roughly regular deformation, and forming a flat and compact end face.

As preconfigured with the shaping guide portion 121, the tab 102 has decreased strength, and a small axial extrusion force F may cause good deformation of the tab 102 to obtain a flat and compact end face. Therefore the main portion 101 is not easily damaged in the process of shaping.

For ease of description, the specific shape of the shaping guide portion 121 is described below in an unwound state of the tab 102 (not in a wound state).

As shown in FIG. 10, in a specific embodiment, in the unwound state of the tab 102, the length L1 of the tab 102 in the axial direction X of the electrode assembly is 4 millimetres (mm) to 15 millimetres (mm). That is, the length L1 of the first tab area 12 of the first electrode plate 1 in the axial direction X is 4 mm to 15 mm. The length L1 of the first tab area 12 in the axial direction X is set in the range of 4 mm to 15 mm, which may ensure that the tab 102 has enough length and still has enough thickness after being shaped and compressed, so as to avoid welding through the tab 102 when the tab end face 104 and the current collecting plate 34 are welded, and may ensure that the length of the tab 102 is relatively small, reducing the material cost.

Further, In the unwound state of the tab 102, the length L2 of the shaping guide portion 121 in the axial direction X of the electrode assembly is 1/5 to 4/5 of the length L1 of the tab. Setting L2 to be 1/5 to 4/5 of L1 may ensure that the tab 102 is easily deformed during shaping.

In order to ensure that the main portion 101 is not affected by the axial extrusion force F during shaping, in the axial direction X of the electrode assembly, the length L3 of the end of the shaping guide portion 121 close to the main portion 101 from the end portion 103 of the main portion is not less than 0.5 mm. Keeping a certain distance between the shaping guide portion 121 and the end portion 103 of the main portion may avoid causing damage to the first electrode plate 1 because of the axial extrusion force F transmitted to the edge of the first coated area 11.

In an embodiment, the tab tape is applied to the end portion where the tab 102 is connected to the main portion 101, forming a strengthening area 13, and the end portion 103 of the main portion is the position where the edge of the strengthening area 13 coated with the tab tape is connected to the first tab area 12. In FIG. 10, the length L3 is the distance between the end portion of the shaping guide portion 121 and the edge of the tab tape. In another embodiment, the tab 102 is an empty foil, that is, the tab 102 is not coated with other material, in this case, the end portion 103 of the main portion is a position where the edge of the first coated area 11 coated with the active substance is connected to the first tab area 12.

In a specific embodiment, in the unwound state of the tab 102, the shaping guide portion 121 includes a plurality of indentations arranged at intervals. The shaping guide portion 121 according to an embodiment shown in FIG. 7 is an example of the indentation. The plurality of indentations 121a are arranged at intervals to ensure that, in an inner ring of a small curvature radius of the tab 102, the indentations on the first tab area 12 can also guide the deformation.

Specifically, a spacing L4 between adjacent indentations 121a is not more than 10 mm, which may better ensure that the indentations on the inner ring of the tab 102 can guide deformation. The spacing L4 in this embodiment refers to the distance between two adjacent indentations 121a in a length direction Y of the electrode plate.

By setting an included angle between the indentation and the axial direction X of the electrode assembly, the tab 102 may lodge in a predetermined direction, and the tab 102 generates predetermined deformation, forming a shaping deformation area 122. In the present application, the included angle between the indentation and the axial direction X of the electrode assembly refers to an included angle between the center line of the indentation and the axial direction X of the electrode assembly. In each of the following embodiments, an included angle between a long-strip indentation, an opening, etc., and the axial direction X of the electrode assembly refers to an included angle between the center line of each long-strip indentation or the center line of the opening and the axial direction X of the electrode assembly, which will not be described in detail.

Specifically, as shown in FIG. 7, the indentation 121a is long-striped, and an included angle α1 between the long-strip indentation 121a and the axial direction X of the electrode assembly is 30° to 90°. The included angle α1 between the long-strip indentation 121a and the axial direction X is set to be 30° to 90°, and when the tab 102 is subjected to an axial extrusion force F, the long-strip indentation 121ahas a good effect on deformation guidance, which enables the tab 102 to generate directional lodging under the action of a small axial extrusion force F during shaping, forming predetermined deformation.

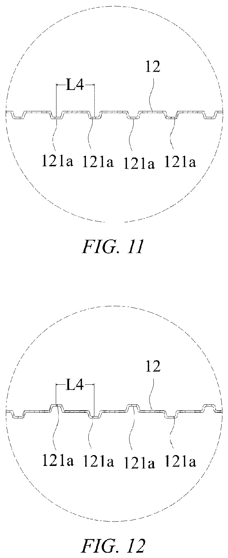

FIG. 11 is a sectional view taken through A1-A1 in FIG. 7, showing an embodiment of an indentation 121a.

As shown in FIG. 11, a plurality of long-strip indentations 121a protrude to the same side of the electrode plate 1, the plurality of long-strip indentations 121a are arranged at intervals, and the spacing L4 between adjacent indentations is not more than 10 mm. The long-strip indentation 121a protruding to the same side of the electrode plate 1 is easily made during the prefabrication of the indentation.

FIG. 12 is a sectional view taken through A1-A1 in FIG. 7, showing another embodiment of the indentation 121a.

As shown in FIG. 12, in another specific embodiment, a plurality of long-strip indentations 121a are arranged at intervals, the plurality of long-strip indentations 121a protrude to two sides of the electrode plate 1, for example, adjacent long-strip indentations 121a respectively face opposite side faces of the electrode plate 1, and the spacing L4 between adjacent indentations is not more than 10 mm. Adjacent long-strip indentations 121a are respectively located on opposite side faces of the electrode plate 1, enabling the shaping guide portion 121 to have a good guiding effect.

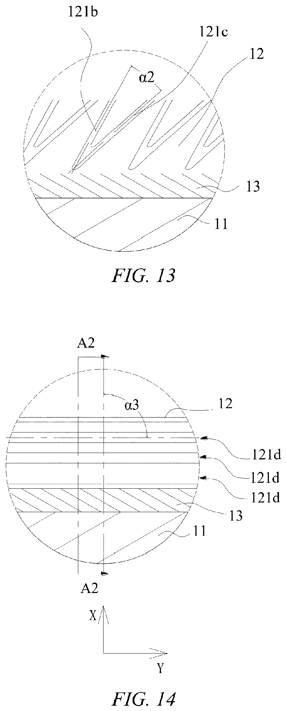

FIG. 13 is a partial schematic diagram of the first electrode plate 1, showing another specific embodiment of the shaping guide portion 121.

As shown in FIG. 13, the shaping guide portion 121 includes a plurality of V-shaped structures formed by first elongated indentation 121b and second elongated indentations 121c, the end of the first elongated indentation 121b close to the main portion 101 coincides with the end of the second elongated indentation 121c close to the main portion 101, forming an inclined V-shaped structure, and an included angle α2 between the first elongated indentation 121b and the second elongated indentation 121c is 30° to 90°. At the same time, two kinds of long-strip indentations with different inclination angles are arranged such that the interior of the tab 102 is more easily compressed in the shaping process, and the compressed tab between the two kinds of indentations can be contained to form a compact end face.

FIG. 14 is a partial schematic diagram of the first electrode plate 1, showing another specific embodiment of the shaping guide portion 121.

As shown in FIG. 14, the shaping guide portion 121 includes a plurality of third elongated indentations 121d, each of which forms an include angle α3 of 90° with the axial direction X of the electrode assembly, that is, the third elongated indentation 121d is arranged parallel to the tab end face 104.

Since the third elongated indentation 121d is arranged parallel to the tab end face 104, the third elongated indentations 121d may be continuous long-strip indentations. In the unwound state of the tab 102, in the length direction Y of the electrode plate, the length of the third elongated indentation 121d may extend to the entire length of the first tab area 12, so after the first electrode plate 1, the second electrode plate 2 and the separator 3 are wound into the electrode assembly 100, the third elongated indentation 121d forms an annular indentation around the tab 102.

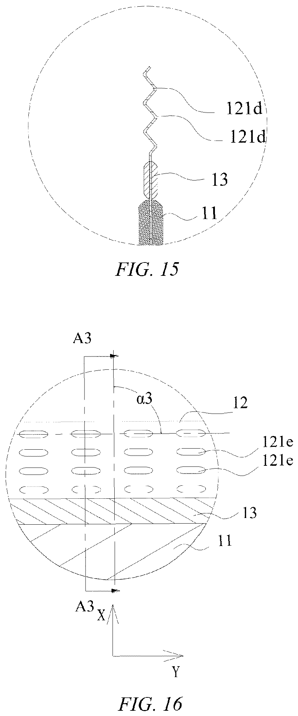

FIG. 15 is a sectional view taken through A2-A2 in FIG. 14.

As shown in FIG. 15, the third elongated indentations 121d are arranged at intervals in the axial direction X of the electrode assembly, forming a wavy structure in the section through A2-A2. An included angle α3 between the third elongated indentation 121d and the axial direction X of the electrode assembly is 90°, and the third elongated indentations are arranged at intervals in the axial direction X of the electrode assembly, so that the tab 102 may be easily compressed when subjected to the axial extrusion force F, and the tab end face 104 after shaping is more compact.

FIG. 16 is a partial schematic diagram of the first electrode plate 1, showing another specific embodiment of the shaping guide portion 121.

As shown in FIG. 16, the shaping guide portion 121 includes a plurality of discontinuous fourth elongated indentations 121e, each of which forms an included angle α3 of 90° with the axial direction X of the electrode assembly. An included angle α3 between the fourth elongated indentation 121e and the axial direction X of the electrode assembly is 90°, that is, the fourth elongated indentation 121e is arranged parallel to the tab end face 104. In the unwound state of the tab 102, a plurality of fourth elongated indentations 121e are arranged at intervals in the length direction Y of the electrode plate, and a plurality of fourth elongated indentations 121e are also arranged at intervals in the axial direction X.

The shape of the fourth elongated indentation 121e may have an oblong structure, for example, two ends of the fourth elongated indentation 121e in the length direction Y of the electrode plate are arcshaped, which makes the boundary of the fourth elongated indentation 121e smoother and more easily compressed when subjected to the axial extrusion force F.

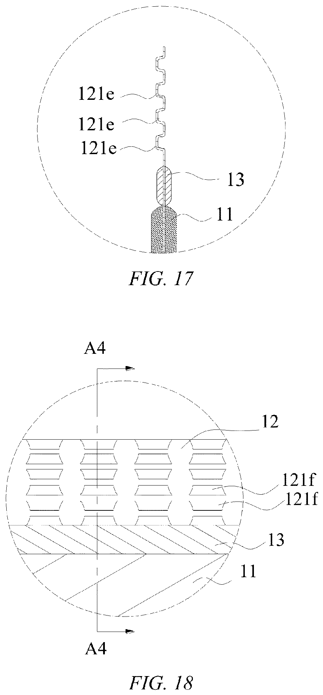

FIG. 17 is a sectional view taken through A3-A3 in FIG. 16.

As shown in FIG. 17, the fourth elongated indentations 121e are arranged at intervals in the axial direction X, with an included angle α3 of 90° between the fourth elongated indentation and the axial direction X of the electrode assembly, which makes the tab 102 more easily compressed when subjected to the axial extrusion force F and makes the tab end face 104 more compact after shaping.

FIG. 18 is a partial schematic diagram of the first electrode plate 1, showing another specific embodiment of the shaping guide portion 121.

As shown in FIG. 18, the shaping guide portion 121 includes a plurality of fifth elongated indentations 121f, each of which forms an included angle α3 of 90° with the axial direction X of the electrode assembly. The fifth elongated indentations 121f may be arranged in the same way as the fourth elongated indentations 121e.

In this embodiment, the fifth elongated indentation 121f has an approximate trapezoidal shape, and two adjacent fifth elongated indentations 121f in the axial direction X are arranged symmetrically, and respectively protrude to opposite sides of the electrode plate 1.

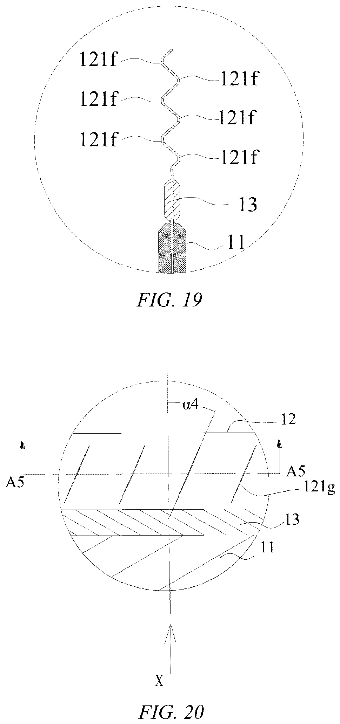

FIG. 19 is a sectional view taken through A4-A4 in FIG. 18.

As shown in FIG. 19, two adjacent fifth elongated indentations 121f respectively protrude to opposite sides of the electrode plate 1, forming a wavy structure in the section through A4-A4. This makes the shaping guide portion 121 have a good effect of deformation guidance, and more easily deformed.

The shaping guide portion 121 of the present application, apart from the indentations in the above embodiments, may also include a plurality of openings arranged at intervals.

FIG. 20 is a partial schematic diagram of the first electrode plate 1, showing another specific embodiment of the shaping guide portion 121.

As shown in FIG. 20, the shaping guide portion 121 includes a linear incision 121g forming an included angle α4 of 30° to 90° with the axial direction X of the electrode assembly. The linear incision 121g is an elongated opening cut in the first tab area 12, thereby reducing the strength of the first tab area 12.

Since the included angle α4 between the linear incision 121g and the axial direction X is 30° to 90°, during shaping, when the tab 102 is subjected to the axial extrusion force F, the linear incision 121g has a good guiding effect, which enables the tab 102 to generate directional lodging under the action of a small axial extrusion force F, forming predetermined deformation.

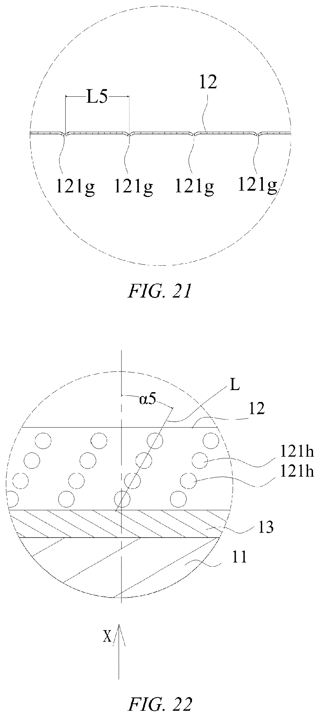

FIG. 21 is a sectional view taken through A5-A5 in FIG. 20.

As shown in FIG. 21, a plurality of linear incisions 121g are arranged at intervals, which may ensure that the linear incision 121g in the inner ring of the small curvature radius of the tab 102 can also have an effect on deformation guidance. Specifically, a spacing L5 between adjacent linear incisions 121g is not more than 10 mm, which may better ensure that the linear incision 121g in the inner ring of the tab 102 has an effect on deformation guidance. The spacing L5 in this embodiment refers to the distance between two adjacent linear incisions 121g in the length direction Y of the electrode plate.

FIG. 22 is a partial schematic diagram of the first electrode plate 1, showing another specific embodiment of the shaping guide portion 121.

As shown in FIG. 22, the shaping guide portion 121 includes a plurality of hole-shaped incisions 121h arranged in the direction of a straight line L, and an included angle α5 between the straight line L and the axial direction X of the electrode assembly is 30° to 90°. During shaping, when the tab 102 is subjected to the axial extrusion force F, the hole-shaped incisions 121h arranged in the direction of the straight line L may have a good effect on deformation guidance, which enables the tab 102 to generate directional lodging under the action of a small axial extrusion force F, forming predetermined deformation.

The hole-shaped incision 121 in this embodiment of the present application is not merely limited to a circular incision in FIG. 22, for example, an oblong incision, etc. is also possible; and the arrangement of the incisions is also not limited to the arrangement in the direction of the straight line L, and the form of the incisions that can realize the deformation guidance of the shaping guide portion 121 and the arrangement thereof all fall within the scope of protection of the present application.

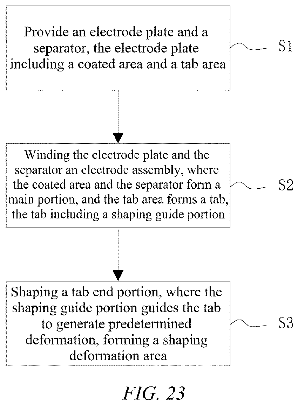

FIG. 23 is a flowchart of a method for manufacturing an electrode assembly 100 according to a specific embodiment of the present application.

As shown in FIG. 23, an embodiment of the present application also provides a method for manufacturing an electrode assembly, the manufacturing method includes the following steps:
Step S1, an electrode plate and a separator are provided, the electrode plate including a coated area and a tab area.

In step S1, a first electrode plate 1 and a second electrode plate 2 are prepared, the first electrode plate 1 and the second electrode plate 2 are coated with an active substance, and when the electrode plate is coated with an active material, an area not coated with the active material is preserved at the edge of each of the electrode plates, the area coated with the active material is called as a coated area, and the area not coated with the active material is called as a tab area. An active substance for the first electrode plate 1 is coated on a first coated area 11 of the first electrode plate 1, and an active substance for the second electrode plate 2 is coated on a second coated area 21 of the second electrode plate 2. In the coated area, the active substance is coated on a current collector formed by a metal sheet, while the tab area is not coated with the active substance.

Step S2, the electrode plates and the separator are wound into an electrode assembly, where the coated area and the separator form a main portion, and the tab area forms a tab, the tab including a shaping guide portion; and
the shaping guide portion 121 is prefabricated on the tab area. The shaping guide portion 121 may be prefabricated on the tab area before the electrode assembly is wound, or the shaping guide portion 121 may be processed on the tab area in the process of winding the electrode plate and the separator 3.

The first electrode plate 1, the second electrode plate 2 and the separator 3 are wound into the electrode assembly 100, and the separator 3 is located between the first electrode plate 1 and the second electrode plate 2 to insulate the two.

Step S3, a tab end portion 104 is shaped, where the shaping guide portion 121 guides the tab 102 to generate predetermined deformation, forming a shaping deformation area 122.

Kneading treatment may be used to shape the end face of the tab 102 of the electrode assembly 100. In the process of shaping, the shaping guide portion 121 guides the tab 102 to generate predetermined deformation, forming the shaping deformation area 122, enabling the tab 102 to lodge in the predetermined direction, and forming roughly regular deformation.

In the electrode assembly 100, the battery D, the device and the method for manufacturing the electrode assembly provided in the present application, the shaping guide portion 121 is provided on the tab 102, and when the tab end face 104 is shaped, the shaping guide portion 121 guides the tab 102 to generate roughly regular deformation, thereby forming the compact and flat tab end face 104. At the same time, the arrangement of the shaping guide portion 121 reduces the force required for the shrinking deformation of the tab 102 and avoids damage or misalignment of the electrode plate.

The foregoing descriptions are merely preferred embodiments of the present application, but are not intended to limit the present application. For those skilled in the art, the present application may have various modifications and variations. Any modifications, equivalent substitutions, improvements, and the like made within the spirit and principle of the present application should be included within the scope of protection of the present application.

## Claims

1. An electrode assembly for a secondary battery, **characterized by** comprising:
a main portion; and
a tab located at an end portion of the main portion and connected to the main portion,
the tab comprising a shaping guide portion and a shaping deformation area, and
the shaping guide portion guiding the tab to generate predetermined deformation during shaping so as to form the shaping deformation area.

2. The electrode assembly according to claim 1, **characterized in that**, in an unwound state of the tab, the shaping guide portion comprises a plurality of indentations arranged at intervals.

3. The electrode assembly according to claim 2, **characterized in that**, the indentations comprise a long-strip indentation forming an included angle of 30° to 90° with an axial direction of the electrode assembly.

4. The electrode assembly according to claim 3, **characterized in that**, the indentations comprise a first elongated indentation and a second elongated indentation, wherein the end of the first elongated indentation close to the main portion coincides with the end of the second elongated indentation close to the main portion, so that an included angle between the first elongated indentation and the second elongated indentation is 30° to 90°.

5. The electrode assembly according to claim 2, **characterized in that**, the indentations comprise a long-strip indentation forming an included angle of 90° with an axial direction of the electrode assembly.

6. The electrode assembly according to claim 2, **characterized in that**, the indentations comprise discontinuous long-strip indentations, each of which forms an included angle of 90° with an axial direction of the electrode assembly.

7. The electrode assembly according to claim 1, **characterized in that**, in an unwound state of the tab, the shaping guide portion includes a plurality of openings arranged at intervals.

8. The electrode assembly according to claim 7, **characterized in that**, the openings comprise a linear incision forming an included angle of 30° to 90° with an axial direction of the electrode assembly.

9. The electrode assembly according to claim 7, **characterized in that**, the openings comprise a plurality of hole-shaped incisions arranged in a straight line, the straight line forming an included angle of 30° to 90° with an axial direction of the electrode assembly.

10. The electrode assembly according to any one of claims 2-6, **characterized in that**, a spacing between the indentations is not more than 10 mm.

11. The electrode assembly according to any one of claims 7-9, **characterized in that**, a spacing between the openings is not more than 10 mm.

12. The electrode assembly according to any one of claims 1-9, **characterized in that**, a strengthening area is provided at the end of the tab connected to the main portion.

13. The electrode assembly according to any one of claims 1-9, **characterized in that**, in an unwound state of the tab, the length of the tab in an axial direction of the electrode assembly is 4-15 mm.

14. The electrode assembly according to any one of claims 1-9, **characterized in that**, in an unwound state of the tab, the length of the shaping guide portion in an axial direction of the electrode assembly is 1/5 - 4/5 of the length of the tab.

15. The electrode assembly according to claim 15, **characterized in that**, in the axial direction of the electrode assembly, the length of the end of the shaping guide portion close to the main portion from the end of the main portion connected to the tab is not less than 0.5 mm.

16. A battery, **characterized by** comprising the electrode assembly according to any one of claims 1-15.

17. A device, **characterized by** comprising the battery according to claim 16, the battery being used to provide electric energy.

18. A method for manufacturing an electrode assembly, **characterized by** comprising the following steps:
providing an electrode plate and a separator, the electrode plate comprising a coated area and a tab area;
winding the electrode plate and the separator into an electrode assembly, wherein the coated area and the separator form a main portion, and the tab area forms a tab, the tab comprising the shaping guide portion; and
shaping the end of the tab, wherein the shaping guide portion guides the tab to generate predetermined deformation so as to form a shaping deformation area.
